Europäisches Patentamt

European Patent Office

Office européen des brevets

(11) Publication number: **0 355 620**
**A2**

# (12) EUROPEAN PATENT APPLICATION

(21) Application number: **89114885.0**

(22) Date of filing: **11.08.89**

(51) Int. Cl.⁴: **G11B 7/013 , G11B 27/32 , G11B 27/02 , //G11B27/34**

(30) Priority: **18.08.88 JP 204958/88**

(43) Date of publication of application:
**28.02.90 Bulletin 90/09**

(84) Designated Contracting States:
**AT BE CH DE ES FR GB GR IT LI NL SE**

(71) Applicant: **OMRON TATEISI ELECTRONICS CO.**
**10, Tsuchido-cho Hanazono Ukyo-ku Kyoto 616(JP)**

(72) Inventor: **Oki, Yasuhiko Omron Tateisi Electronics Co.**
**Patent Center 20, Igadera Shimokaiinji Nagaokakyo-shi Kyoto 617(JP)**

(74) Representative: **WILHELMS, KILIAN & PARTNER Patentanwälte**
**Eduard-Schmid-Strasse 2 D-8000 München 90(DE)**

(54) **Optical card.**

(57) There is provided a WORM type optical card in which different from a data area including tracks to which a plurality of kinds of data are recorded, a directory area including a track to which directory data indicative of a reading position of each kind of data recorded in the data area is recorded is provided.

Fig. I

EP 0 355 620 A2

## OPTICAL CARD

## BACKGROUND OF THE INVENTION

### Field of the Invention

The present invention relates to an optical card on which data are optically recorded/reproduced.

### Description of Prior Art

Since such a kind of optical card has a memory capacity which is tens of thousand times as large as that of a magnetic card, the use as prepaid card, bank card, health management card, or the like is considered. Such optical cards are mainly classified into a read only type (ROM type) card and a write once read mostly type (WORM type) card to which data can write only once. In the case of the WORM type card, the operations such as to erase the data which has already been recorded and to rewrite new data into the same recording area as in the magnetic card cannot be executed; however, since the memory capacity is large, an unrecorded area is left and new data can be additionally written into the unrecorded area.

As mentioned above, in the case of the WORM type optical card, since data cannot be erased and rewritten, a file name is added to the head of each data and recorded together with the data, on the other hand, when desired data is read out, the relevant file name is searched and the data relating to the relevant file name is read out.

However, according to the above method, since it is necessary to search all of the tracks in the recorded areas in order to read out desired data from all of the data recorded on the optical card, there is a problem such that it takes a very long time to read out the desired data.

## SUMMARY OF THE INVENTION

The present invention is made in consideration of the above circumstances and it is an object of the present invention to provide a WORM type optical card wherein desired data can be read out of the recorded data in a short time.

In a WORM type optical card, the invention is characterized in that different from a data area including tracks on which a plurality of kinds of data are recorded, a directory area including a track on which directory data indicative of a readout position of the data of each kind recorded in the data area is recorded is provided.

According to the above construction, each time new data is written onto the next unused (unrecorded) track in the data area, the directory data relating to the new data can be additionally written to the unused (unrecorded) location or the next unused (unrecorded) track in the directory area.

On the other hand, in the case of reading data, by searching desired directory data from the directory area, the recording position (track number or the like) in the data area in which the data to be read out has been written can be immediately determined.

## BRIEF DESCRIPTION OF THE DRAWINGS

Fig. 1 is a diagram showing a data area and a directory area in a WORM type optical card and data written in these areas according to the present invention;

Fig. 2a is a flowchart showing a recording processing procedure of data to the optical card; and

Fig. 2b is a flowchart showing a reproducing processing procedure of data from the optical card.

## DETAILED DESCRIPTION OF THE PREFERRED EMBODIMENT

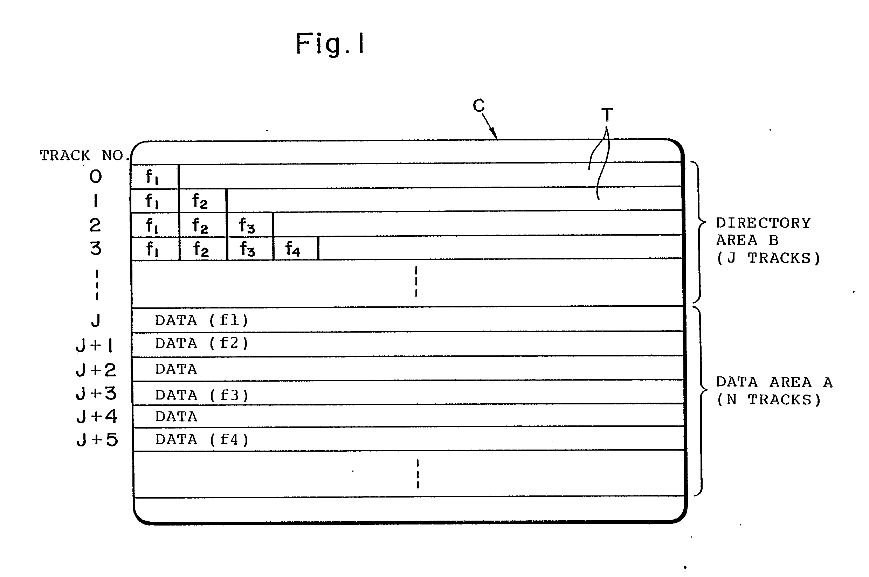

Fig. 1 is a map diagram showing a recording state of a write once read mostly (WORM) type optical card according to an embodiment of the present invention.

A number of tracks T are provided on the surface of a WORM type optical card C according to the embodiment. The tracks T are divided into a data area A (including N tracks) and a directory area B (J tracks). A number of kinds of data are recorded in the data area A. On the other hand, directory data $f_1$, $f_2$, and the like indicative of the reading position of each kind of data recorded in the data area A are recorded to the respective tracks T in the directory area B. Each directory data includes a file name of each kind of data recorded in the data area A and the track number indicative of the data recorded track.

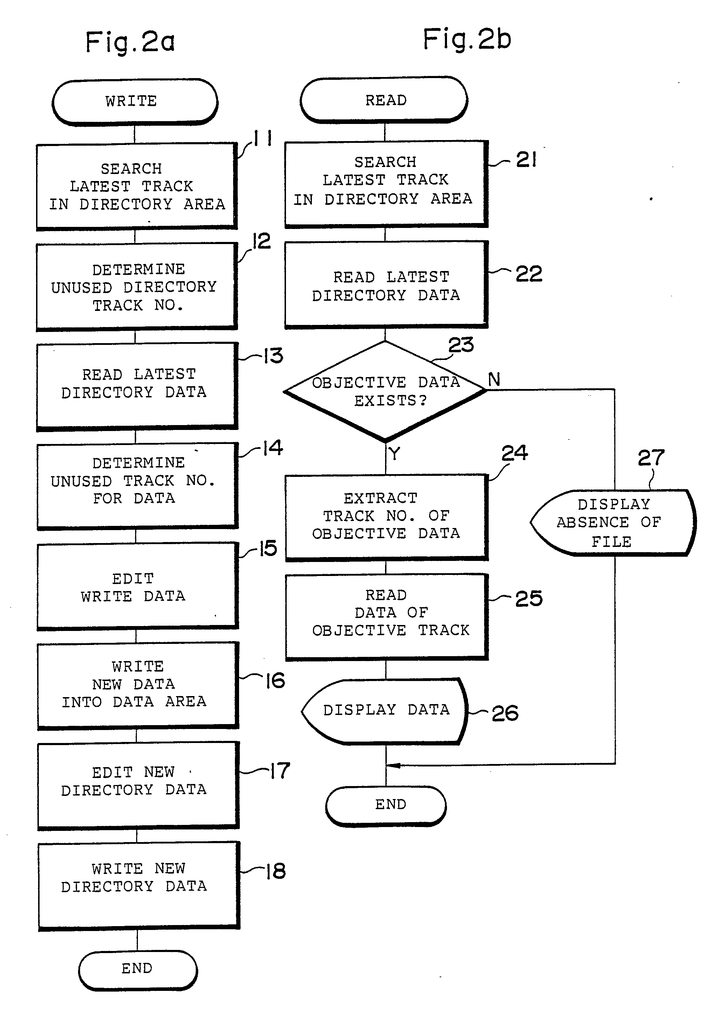

Recording/reproducing processing procedures of the data for the optical card with the above construction will now be described with reference to flowcharts shown in Figs. 2a and 2b.

(Writing processing procedure)

It is now assumed that data has already been written to a plurality of tracks (in this example, the tracks of the track numbers J to J + 4) in the data area A and, in corresponding thereto, the directory data $f_1$ to f3 which have already been written exist in the tracks of the track numbers 0 to 2 in the directory area B.

In the case of writing new data in the above state, as shown in Fig. 2a, the latest track (in this example, the track of the track number 2) on which the directory data has finally been written in the directory area B is first searched (step 11). As such a searching method, by applying the binary search or dichotomizing search or the like between the track numbers 0 to J-1 in the directory area B, an objective track can be searched in a short time.

When the track (track number 2) in which the latest directory data was written is searched, the next unused (unrecorded) track number (in this example, track number 3) in the directory area B is calculated (step 12). The directory data (in this example, $f_1$ to $f_3$) of the track (track number 2) which was searched as mentioned above are read out (step 13). On the basis of the readout directory data $f_1$ to $f_3$ the number of unused (unrecorded) track (in this example, track number J + 5) to be recorded next in the data area A is calculated (step 14). After the data to be written was edited (step 15), new data is written to the unused tracks which were calculated as mentioned above (by only the necessary tracks according to the data amount from the track number J + 5 as the first track number) (step 16).

The directory data $f_1$ to $f_4$ to which the directory data $f_4$ relating to the newly written data was added to the old directory data $f_1$ to $f_3$ which have already been written are edited (step 17). The edited directory data $f_1$ to $f_4$ are written into the unused track having the track number (in this example, track number 3) calculated in step 12 (step 18).

The above writing process is executed on the assumption of an optical card writing apparatus which can execute the writing process only once for one track. For instance, to enable the next directory data $f_2$ and the like to be continuously written in the next writing operation after the directory data $f_1$ of the track of the track No. 0, a write head must be accurately positioned to the next position of the final bit of the directory data $f_1$. To enable such a positioning operation to be realized, an extremely high accurate mechanism is needed.

In the case of using a writing apparatus which does not have a high accurate positioning mechanism, as in the above-mentioned writing process, the whole directory data $f_1$ to $f_4$ which are obtained by adding the new directory data $f_4$ to the old directory data $f_1$ to $f_3$ are written to the new unused track (track No. 3).

In the case of using a writing apparatus having the high accurate positioning mechanism, in the track of the directory data which has already been written, new directory data can be written subsequent to that data. In such a case, the directory area B can be decreased and the data area A can be widened by the amount of the reduced area in the directory area B.

(Reading processing procedure)

When data is read, as shown in Fig. 2b, the track (in this example, track No. 3) in which the latest directory data was written is searched in the directory area B (step 21). The directory data (in the example, $f_1$ to $f_4$) of the searched track (track No. 3) are read out (step 22). A check is made to see if the file name of desired data (for instance, data corresponding to $f_4$) is included in the directory data $f_1$ to $f_4$ or not (step 23). If the directory data including the relevant file name exists, the track number included in the directory data containing the file name is subsequently obtained (for instance, track No. J + 5) (step 24). The data of the relevant track (track No. J + 5) is read out (step 25) and the content of the data is displayed on a display device or the like (step 26).

If the file name of the data to be read out is not included in the readout directory data $f_1$ to $f_4$ in step 23, a message indicative of the absence of the relevant data is displayed on the display device or the like (step 27).

## Claims

1. A WORM type optical card, wherein different from a data area including tracks to which a plurality of kinds of data are recorded, a directory area including a track to which directory data indicative of a reading position of each kind of data recorded in said data area is recorded is provided.

2. A method of writing data to an optical card having a data area including a plurality of tracks and a directory area including a plurality of tracks, comprising the steps of:
searching the latest track in which latest directory data has been recorded in said directory area and reading out the latest directory data from said searched latest track;
determining a track to which new data is to be written in said data area on the basis of the readout latest directory data;
writing the new data to the determined track; and

writing new directory data which is obtained by adding directory data relating to said written new data to the directory data which was read out of the latest track to the next track of said latest track in the directory area.

3. A method of reading data from an optical card having a data area including a plurality of tracks and a directory area including a plurality of tracks, comprising the steps of:

searching the latest track in which latest directory data has been recorded in said directory area and reading out directory data from said searched latest track;

determining a track position at which objective data has been recorded in said data area on the basis of the directory data which was read out of said latest track; and

reading out the data recorded on said determined track therefrom.

# Fig.1

TRACK NO.

| | | | | |
|---|---|---|---|---|
| 0 | $f_1$ | | | |
| 1 | $f_1$ | $f_2$ | | |
| 2 | $f_1$ | $f_2$ | $f_3$ | |
| 3 | $f_1$ | $f_2$ | $f_3$ | $f_4$ |

DIRECTORY AREA B (J TRACKS)

| | |
|---|---|
| J | DATA (f1) |
| J+1 | DATA (f2) |
| J+2 | DATA |
| J+3 | DATA (f3) |
| J+4 | DATA |
| J+5 | DATA (f4) |

DATA AREA A (N TRACKS)

EP 0 355 620 A2

# Fig.2a

```
    ┌──────────┐
    │  WRITE   │
    └──────────┘
         │
┌─────────────────────┐ ╱11
│      SEARCH         │
│   LATEST TRACK      │
│  IN DIRECTORY AREA  │
└─────────────────────┘
         │
┌─────────────────────┐ ╱12
│     DETERMINE       │
│ UNUSED DIRECTORY    │
│    TRACK NO.        │
└─────────────────────┘
         │
┌─────────────────────┐ ╱13
│    READ LATEST      │
│  DIRECTORY DATA     │
└─────────────────────┘
         │
┌─────────────────────┐ ╱14
│     DETERMINE       │
│ UNUSED TRACK NO.    │
│     FOR DATA        │
└─────────────────────┘
         │
┌─────────────────────┐ ╱15
│       EDIT          │
│    WRITE DATA       │
└─────────────────────┘
         │
┌─────────────────────┐ ╱16
│      WRITE          │
│    NEW DATA         │
│  INTO DATA AREA     │
└─────────────────────┘
         │
┌─────────────────────┐ ╱17
│    EDIT NEW         │
│  DIRECTORY DATA     │
└─────────────────────┘
         │
┌─────────────────────┐ ╱18
│   WRITE NEW         │
│ DIRECTORY DATA      │
└─────────────────────┘
         │
    ┌──────────┐
    │   END    │
    └──────────┘
```

# Fig.2b

```
    ┌──────────┐
    │   READ   │
    └──────────┘
         │
┌─────────────────────┐ ╱21
│      SEARCH         │
│   LATEST TRACK      │
│  IN DIRECTORY AREA  │
└─────────────────────┘
         │
┌─────────────────────┐ ╱22
│    READ LATEST      │
│  DIRECTORY DATA     │
└─────────────────────┘
         │
        ╱ ╲  23
       ╱   ╲
  ╱ OBJECTIVE DATA ╲   N     ┌──────────┐ 27
  ╲   EXISTS?     ╱──────────│ DISPLAY  │
       ╲   ╱               │ ABSENCE OF│
        ╲ ╱                │   FILE   │
         │ Y              └──────────┘
┌─────────────────────┐ ╱24
│     EXTRACT         │
│   TRACK NO. OF      │
│  OBJECTIVE DATA     │
└─────────────────────┘
         │
┌─────────────────────┐ ╱25
│      READ           │
│    DATA OF          │
│  OBJECTIVE TRACK    │
└─────────────────────┘
         │
   ┌──────────────┐ ╱26
   │ DISPLAY DATA │
   └──────────────┘
         │
    ┌──────────┐
    │   END    │
    └──────────┘
```